# FASCICULE DE BREVET EUROPEEN

(11) **EP 1 071 183 B1**
(45) Date de publication et mention de la délivrance du brevet: **10.03.2010**
(21) Numéro de dépôt: 00401625.9
(22) Date de dépôt: 08.06.2000
(51) Int. Cl.: H02G 3/12

(54) **Support d'appareillage électrique à rapporter sur une goulotte**
Träger für elektrisches Gerät anzubringen auf einen Kabelkanal
Support for an electrical apparatus to be mounted on a duct

(30) Priorité: 20.07.1999 FR 9909399
(43) Date de publication de la demande: 24.01.2001
(73) Titulaire: Legrand France, 87000 Limoges (FR); Legrand SNC, 87000 Limoges (FR)
(72) Inventeur: Jarry, Patrice, 72140 Mont Saint Jean (FR); Adam, Damien, 72240 Saint Symphorien (FR)
(74) Mandataire: Santarelli

(56) Documents cités:
- EP-A- 0 159 554
- EP-A- 0 239 456
- EP-A- 0 600 109
- DE-C- 4 432 669

## Description

L'invention a trait aux supports d'appareillage électrique à rapporter sur une goulotte de cheminement de câblage.

On connaît déjà, notamment par EP 0 702 442 A2, un tel support d'appareillage électrique comportant une plaque de base à fixer au mur au-dessus de la goulotte et un couvercle s'installant sur la plaque de base et recouvrant la goulotte, celle-ci pouvant avoir l'une de trois largeurs prédéterminées.

Lorsque la goulotte a la largeur la plus grande, la plaque de base est disposée directement contre l'un des bords longitudinaux du socle de goulotte tandis que pour les largeurs inférieures, il est prévu des flasques qui servent d'entretoises entre la plaque de base et le bord longitudinal du socle de goulotte, ces flasques servant également à la fermeture des trous restant dans les parois latérales du couvercle.

L'invention vise un support du même genre, mais dont les conditions de mise en place sur une goulotte de petite largeur soient améliorées.

Elle propose à cet effet un support d'appareillage électrique à rapporter sur une goulotte de largeur nominale, comportant des moyens d'adaptation propres à lui permettre d'être mis en place sur une goulotte de largeur inférieure prédéterminée, lesdits moyens d'adaptation comportant deux flasques de fermeture à établir entre ladite goulotte de largeur inférieure et ledit support, le long d'une partie respective des bords transversaux de ce dernier ; **caractérisé en ce que** les moyens d'adaptation comportent en outre une semelle, de largeur égale à la différence des largeurs de la goulotte de largeur nominale et de la goulotte de largeur inférieure, à établir en bordure du socle de ladite goulotte de largeur inférieure, s'étendant d'un des flasques de fermeture à l'autre, et munie de moyens d'engagement situés le long de ses bords transversaux, propres à l'assujettissement desdits flasques.

La présence de cette semelle offre notamment l'avantage de procurer un excellent maintien des flasques, utile en cas de choc, en particulier suivant la direction longitudinale, contrairement aux flasques de fermeture du support antérieur sus mentionné, qui ne comportent aucun moyen d'engagement situé au niveau de l'ouverture qu'ils ferment.

Selon des caractéristiques préférées, ledit support comporte un élément encliquetable muni, le long d'un premier bord longitudinal, d'une première série d'au moins une patte d'accrochage, et, le long de son deuxième bord longitudinal, d'une deuxième série d'au moins une patte d'accrochage, chaque patte d'accrochage de la première série et de la deuxième série étant prévue pour se prendre, respectivement, sur un premier membre de retenue et sur un deuxième membre de retenue du socle de ladite goulotte de largeur nominale ; tandis que ladite semelle comporte des moyens de retenue adaptés à recevoir ladite première série d'au moins une patte d'accrochage pour permettre l'encliquetage dudit élément du support, d'une part, grâce à ladite première série d'au moins une patte d'accrochage, sur lesdits moyens de retenue de ladite semelle, lorsque celle-ci est établie en bordure du socle de ladite goulotte de largeur inférieure, et, d'autre part, grâce à ladite deuxième série d'au moins une patte d'accrochage, sur un membre de retenue de ladite goulotte de largeur inférieure.

La mise en place du support suivant l'invention sur une goulotte de largeur nominale se fait ainsi directement sur cette dernière, ce qui est simple, rapide et commode, contrairement au support antérieur sus mentionné, dans lequel la plaque de base doit être fixée au mur au-dessus de la goulotte dans tous les cas, y compris avec la goulotte de plus grande largeur.

Selon d'autres caractéristiques préférées, pour des raisons de qualité du maintien procuré ainsi que pour des raisons de simplicité et de commodité tant à la mise en place qu'à la fabrication :
- lesdits flasques de fermeture comportent chacun des tenons d'engagement dans des mortaises de ladite semelle ; et/ou éventuellement
- lesdits flasques de fermeture comportent chacun un tenon d'engagement avec un capot que comporte ledit support ; et/ou éventuellement
- lesdits flasques de fermeture comportent chacun une paroi plane encadrée par un rebord transversal à ladite paroi plane, venant du côté interne.

Selon d'autres caractéristiques préférées, pour des raisons de commodité et de simplicité de fabrication et d'utilisation, ladite semelle et lesdits flasques de fermeture sont moulés d'une seule pièce avec un élément dudit support et séparables de cet élément par des zones sécables.

L'exposé de l'invention sera maintenant poursuivi par la description de deux exemples de réalisation, donnée ci-après à titre illustratif et non limitatif, en référence aux dessins annexés. Sur ceux-ci :
- la figure 1 est une vue en perspective montrant comment l'on procède à la mise en place, sur un socle de goulotte de largeur nominale, d'une platine que comporte un premier mode de réalisation d'un support d'appareillage électrique conforme à l'invention ;
- la figure 2 est une vue en perspective montrant cette platine en place sur ce socle, avec un appareillage électrique installé dans la platine et le couvercle de goulotte mis en place de part et d'autre de cette dernière, et montrant comment l'on effectue, sur cet ensemble, la mise en place du capot que comporte également le support d'appareillage dans ce mode de réalisation ;
- la figure 3 est une vue en perspective similaire à la figure 2, montrant le capot en place sur la platine et montrant également un enjoliveur à mettre en place sur la platine et sur le capot ;
- la figure 4 est une vue en perspective d'un ensemble moulé d'une seule pièce comportant la platine du support et comportant une semelle et deux flasques de fermeture permettant la mise en place du support d'appareillage sur une goulotte de largeur inférieure à celle montrée sur les figures 1 à 3 ;
- la figure 5 est une vue similaire à la figure 1, pour cette goulotte de largeur inférieure, montrant également comment l'on met en place la semelle sur la même paroi que celle à laquelle est fixé le socle de goulotte, avant de procéder à la mise en place de la platine ;
- la figure 6 est une vue similaire à la figure 2, montrant également comment l'on procède à la mise en place des flasques de fermeture ;
- la figure 7 est une vue similaire à la figure 3, mais ne montrant pas l'enjoliveur, pour un deuxième mode de réalisation du support conforme à l'invention, ne comportant qu'un capot qui se met directement en place sur la goulotte ;
- la figure 8 est une vue en perspective de ce capot ;
- la figure 9 est une vue similaire aux figures 5 et 6, montrant, pour une goulotte de largeur inférieure, comment l'on met en place la semelle, le couvercle de goulotte et les flasques de fermeture avant de mettre en place le support d'appareillage ; et
- la figure 10 montre ces différents éléments une fois la mise en place effectuée.

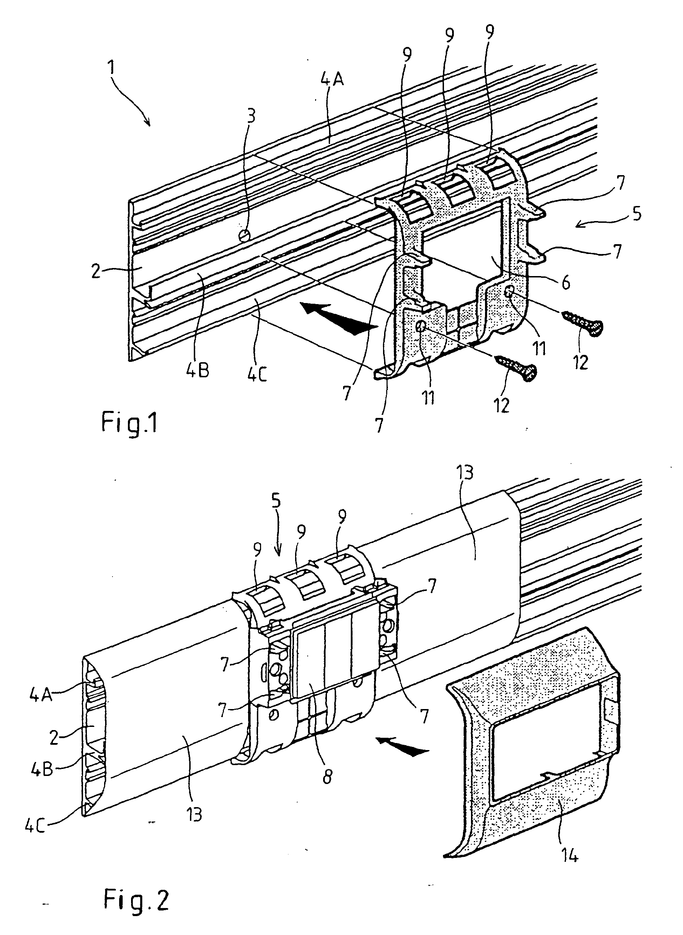

Le socle 1 montré sur les figures 1 à 3 fait partie d'une goulotte dont la hauteur est de 120 mm et dont la profondeur est de 20 mm. Ce socle comporte un fond ou tablier 2, globalement plat, dont la face arrière (face cachée sur les figures 1 à 3) est prévue pour être disposée contre une paroi le long de laquelle il faut faire cheminer des câbles, ici le pied d'un mur vertical auquel le tablier 2 est fixé grâce à des vis 3, le socle 1 présentant également, en saillie sur la face avant du tablier 2, plusieurs cornières, ici au nombre de trois, respectivement une première cornière de bordure longitudinale 4A, une cornière centrale 4B et une deuxième cornière de bordure longitudinale 4C.

La platine 5 que comporte le mode de réalisation du support d'appareillage conforme à l'invention illustré sur les figures 1 à 6, a globalement la forme d'un cadre ménageant une ouverture centrale 6 pour loger de l'appareillage électrique, les bords de la platine 5 que l'on voit en haut et en bas sur la figure 1 étant recourbés vers l'arrière tandis que les bords que l'on voit respectivement à gauche et à droite, présentent chacun sur la face avant deux doigts 7 d'accrochage pour un appareillage électrique tel que celui repéré par 8 sur les figures 2, 3 et 6.

Dans le bord recourbé que l'on voit en haut sur la figure 1, sont ménagées trois fenêtres dont le côté arrière de chacune est longé par une patte d'accrochage 9 légèrement en saillie du côté interne, et orientée suivant un plan parallèle à celui de l'ouverture 6.

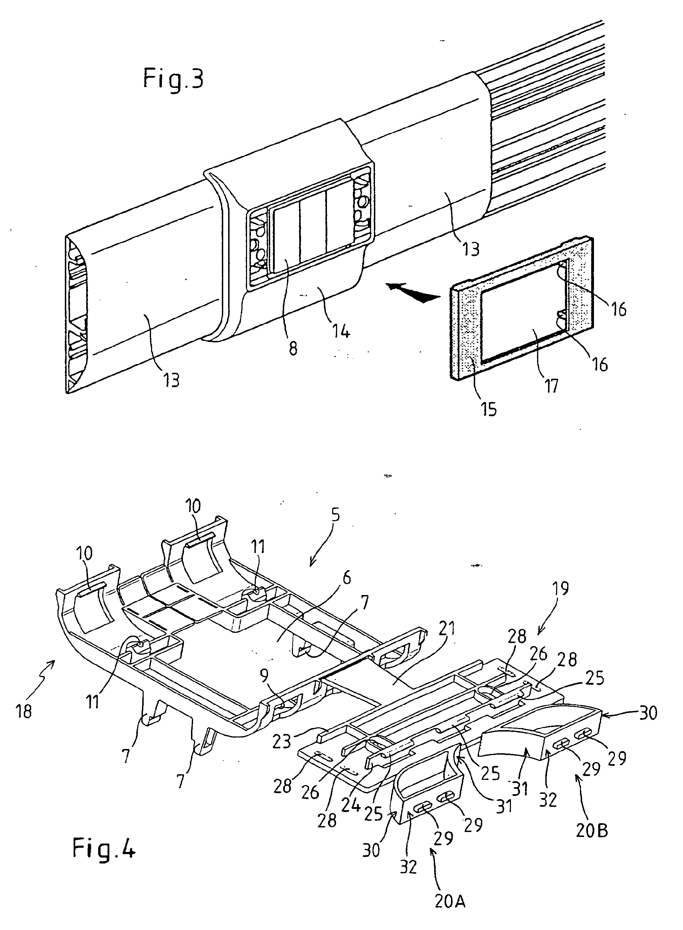

De même, le bord de la platine 5 que l'on voit en bas sur la figure 1, présente deux fenêtres dont le côté arrière de chacune est muni d'une patte d'accrochage 10 (figure 4) conformée d'une manière similaire aux pattes 9.

Les bords longitudinaux respectifs de la platine 5, c'est-à-dire les bords que l'on voit respectivement en haut et en bas sur la figure 1, sont écartés, au niveau de la série de pattes 9 et de la série de pattes 10, d'une distance correspondant à peu près à l'écart entre les cornières 4A et 4C, sur lesquelles se prennent respectivement les pattes 9 et les pattes 10, lorsque la platine 5 est pressée contre le socle 1, la platine 5 présentant l'élasticité requise pour s'encliqueter ainsi, les pattes 9 venant plus précisément se prendre derrière l'aile de la cornière 4A qui se trouve à son extrémité opposée au tablier 2 tandis que les pattes 10 viennent se prendre sur une aile de la cornière 4C non visible sur les figures 1, 3 et 5, s'étendant en saillie par rapport à l'aile de la cornière 4C qui se raccorde au tablier 2, du côté qui est situé en bas sur la figure 1.

Lorsque la platine 5 est ainsi encliquetée sur le socle 1, les trous 11 se trouvent en regard de l'aile de la cornière 4B qui se raccorde au tablier 2, des vis 12, qui passent au travers des trous 11 et qui se prennent dans cette aile de la cornière 4B, qui est creuse à cet effet, étant mises en place pour immobiliser solidement la platine 5 sur le socle 1.

Pour installer l'appareillage 8, on fait sortir l'extrémité des câbles qui doivent y être raccordés par l'ouverture 6, on effectue leur raccordement, puis on encliquette l'appareillage 8 sur les doigts 7.

Ensuite, une fois le couvercle de goulotte 13 mis en place, avec chacun des tronçons situés respectivement de part et d'autre de la platine 5 qui est contre cette dernière, on met en place le capot 14 sur la platine 5, par encliquetage, le capot 14 étant muni de pattes d'accrochage adaptées chacune à se prendre sur la platine 5 au niveau de ses bords longitudinaux, et plus précisément, pour le bord que l'on voit en haut sur les figures 1 et 2, sur le côté des deux fenêtres extrêmes qui est opposé au pattes 9, et, pour le bord que l'on voit en bas, sur le côté des fenêtres opposé aux pattes 10.

Le capot 14 est plus large que la platine 5, de sorte que, quand il est en place sur cette dernière, il recouvre non seulement celle-ci, mais également, au niveau de chacun de ses bords transversaux, une portion du couvercle 13, la tranche interne de chacun des bords longitudinaux du capot 14 ayant exactement le même profil que la surface externe du couvercle 13, ainsi qu'on le voit sur la figure 3, de sorte que la tranche des bords transversaux du capot 14 est en contact avec la surface externe du couvercle 13 et épouse étroitement celle-ci, ce qui est favorable à la protection vis-à-vis de l'extérieur des éléments électriques renfermés dans la goulotte 1, 13 et dans le support 5, 14.

Ensuite, pour terminer l'opération d'installation de l'appareillage 8, on procède à la mise en place de l'enjoliveur 15, qui comporte des pattes d'accrochage 16 situées en bordure de son ouverture 17, pour permettre sa mise en place par encliquetage sur l'appareillage 8.

L'ensemble 18 montré sur la figure 4, qui comporte notamment la platine 5, est en matière plastique moulée d'une seule pièce.

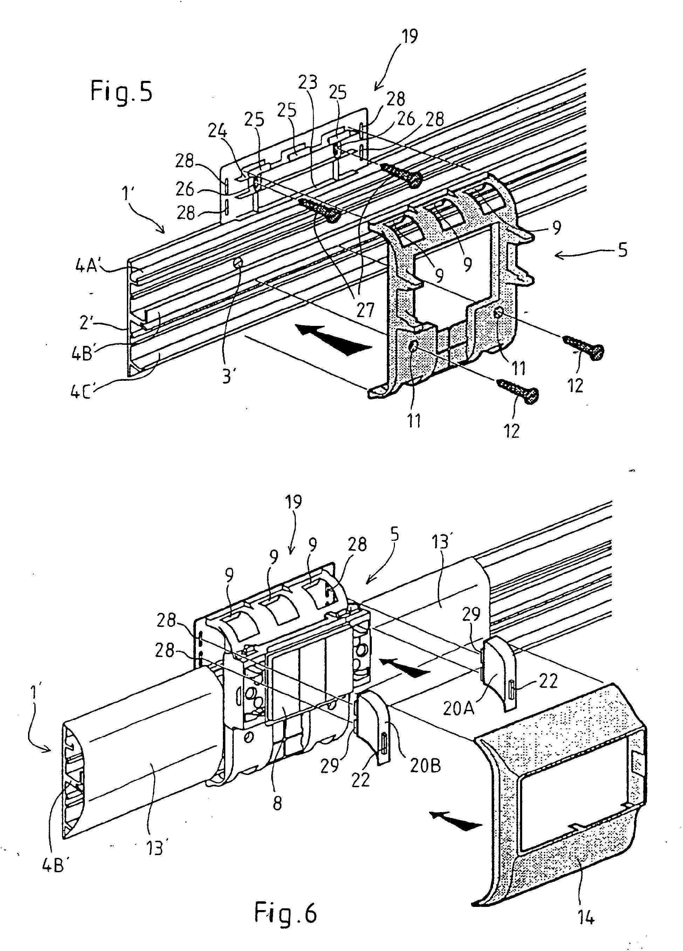

En outre de la platine 5, il comporte une semelle 19 et deux flasques 20A et 20B, une languette de liaison 21 étant prévue entre la platine 5 et la semelle 19, la languette 21 étant reliée à la platine 5, au niveau de la fenêtre centrale de son bord longitudinal que l'on voit en haut sur les figures 1 et 2, par une zone sécable tandis que, de même, la languette 21 est réunie au centre d'un des bords longitudinaux de la semelle 19, par une zone sécable. Chaque flasque 20A et 20B est quant à lui réuni à la semelle 19, sur le bord longitudinal opposé à celui par lequel elle est reliée à la languette 21, par un tenon 22 (figure 6), une zone sécable étant prévue entre chaque tenon 22 et la semelle 19, pour permettre d'en détacher les flasques 20A et 20B.

Ainsi qu'on le voit sur les figures 5 et 6, la semelle 19 et les flasques 20A et 20B sont prévus pour permettre la mise en place du support d'appareillage 5, 14 sur une goulotte 1', 13' de largeur inférieure à la goulotte 1, 13, ici de 80 mm au lieu de 120 mm. D'une façon générale, on a employé pour les éléments de la goulotte 1', 13' similaires à ceux de la goulotte 1, 13, les mêmes références numériques que pour cette dernière, mais affectées d'un indice prime.

La semelle 19 est de forme générale rectangulaire, avec une largeur correspondant à celle du capot 14 (et donc supérieure à celle de la platine 5), et une largeur égale à la différence entre celle du socle de goulotte 1 et celle du socle de goulotte 1'.

Le long du bord longitudinal par lequel elle était reliée, avant séparation, à la languette 21, la semelle 19 présente une nervure latérale 23 prévue pour faciliter le positionnement de la semelle 19 sur le bord longitudinal du socle 1', la semelle 19 présentant, sur la même face, d'autres nervures longitudinales reliées par des nervures transversales, de sorte que la semelle 19 présente globalement un nervurage en forme d'échelle.

La nervure longitudinale 24 la plus éloignée de la nervure 23 porte, en saillie à partir de sa tranche longitudinale, trois pattes de retenue 25 parallèles à l'orientation générale de la semelle 19 (et donc transversales à la nervure 24), s'étendant vers l'opposé de la nervure 23, la conformation de la nervure 24 et des pattes 25 ainsi que leur positionnement sur la semelle 19 étant tels que, lorsque cette dernière est disposée avec sa tranche longitudinale, côté nervure 23, en contact avec la tranche longitudinale du socle 1' située du côté de la cornière 4A', la nervure 24 et les pattes 25 peuvent coopérer avec la platine 5 exactement de la même façon qu'avec la cornière 4A du socle 1, les pattes 25 étant situées chacune en correspondance avec une patte 9 respective.

Pour permettre la fixation, en position, de la semelle 19 sur le même mur que le socle 1', il est prévu deux trous 26 de passage pour des vis 27, les trous 26 étant ici de forme oblongue et entourés par une portion du nervurage de la semelle 19.

Cette dernière comporte enfin, le long de chacun de ses deux bords transversaux, deux trous allongés 28 prévus pour servir de mortaise de réception des tenons 29 que comportent les flasques 20A et 20B.

Une fois la semelle 19 mise en place contre le socle 1' et fixée au mur par les vis 27, comme montré sur la figure 5, la mise en place de la platine 5 sur l'ensemble constitué par le socle 1' et par la semelle 19 s'effectue de la même façon que la mise en place sur le socle 1, la nervure 4A, comme expliqué ci-dessus, étant remplacée, pour ce qui est de la retenue de la platine 5, par la nervure 24 et par les pattes 25, le tablier de la semelle 19, c'est-à-dire sa partie plate de laquelle saille le nervurage, prolongeant quant à la lui le tablier 2' du socle 1', de sorte qu'au niveau du support 5, 14, l'isolation électrique est entière vis-à-vis du mur auquel sont fixés le socle 1' et la semelle 19.

Une fois que la platine 5 a ainsi été mise en place sur le socle 1' et sur la semelle 19, que les vis 12 ont été mises en place au travers des trous 11 et dans l'aile 4B', que l'appareillage 8 a été mis en place dans la platine 5 et que le couvercle 13' a été mis en place sur le socle 1', ainsi que montré sur la figure 6, on procède à la mise en place des flasques 20A et 20B, qui sont prévus pour masquer l'ouverture qui subsisterait sinon entre le capot 14, la semelle 19 et le couvercle 13', respectivement à droite et à gauche.

On notera que la tranche de chacun des flasques de fermeture présente une surface courbe 30 relativement longue qui a le même profil que la surface externe du couvercle 13 ou que la tranche des bords longitudinaux du capot 14, sur une certaine longueur à partir d'une extrémité ; que la tranche des flasques 20A et 20B comporte également une autre surface courbe 31, qui suit le même profil que la surface externe du couvercle 13', sur une certaine longueur à partir de l'extrémité ; que la tranche des flasques 20A et 20B présente enfin une surface plate 32, située entre les surfaces 30 et 31, dont la longueur correspond à la largeur de la semelle 19, et de laquelle saillent les tenons 29, chacun des flasques 20A et 20B comportant, comme on le voit sur la figure 4 (détail non illustré sur la figure 6), une paroi plane encadrée par un rebord transversal à cette paroi plane et venant, dans la position de mise en place des flasques, du côté interne.

La mise en place des flasques 20A et 20B se fait en engageant les tenons 29 dans les mortaises 28, les surfaces 32 se trouvant alors contre le tablier de la semelle 19 et les surfaces 31 contre le couvercle 13'.

On procède alors à l'encliquetage du capot 14 sur la platine 5, les flasques 20A et 20B se trouvant alors bordés respectivement par la semelle 19, par le couvercle 13' et par le capot 14.

Au cas où le flasque 20A ou le flasque 20B subirait un effort orienté suivant une direction longitudinale, cet effort, s'il est dirigé vers l'intérieur du support 5, 14, est repris par le bord correspondant de la platine 5 tandis que plus généralement, le déchaussement des flasques est évité de manière très efficace par les tenons 29 engagés dans les mortaises 28 et par les tenons 22 engagés avec le capot 14.

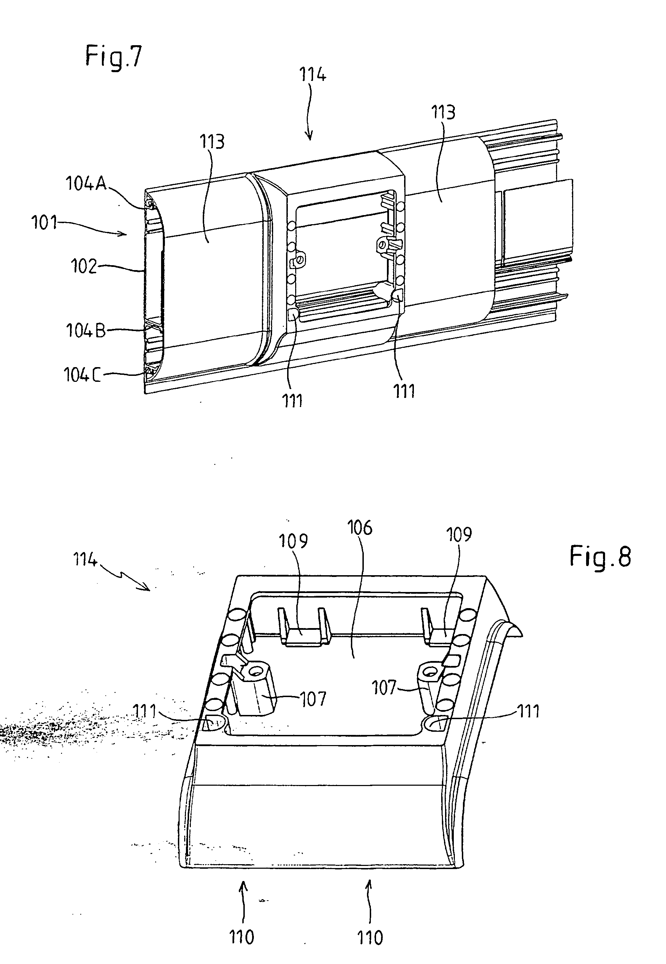

Dans le mode de réalisation montré sur les figures 7 à 10, l'ensemble formé par la platine 5 et par le capot 14 est remplacé par un capot unique 114 muni directement de pattes d'accrochage 109 et de pattes d'accrochage 110 jouant respectivement le même rôle que les pattes 9 et 10 de la platine 5, la fixation de l'appareillage ne se faisant pas, comme sur la platine 5, avec des doigts d'encliquetage 7, mais sur des colonnettes de vissage 107.

D'une façon générale, on a gardé pour les éléments similaires au mode de réalisation des figures 1 à 6, les mêmes références numériques, mais additionnées du chiffre 100.

On notera, s'agissant de la semelle 119, que les moyens de retenue 125 pour les pattes d'accrochage 109, comportent des portions latérales qui sont propres à immobiliser les pattes 109, et donc le capot 114, selon la direction longitudinale.

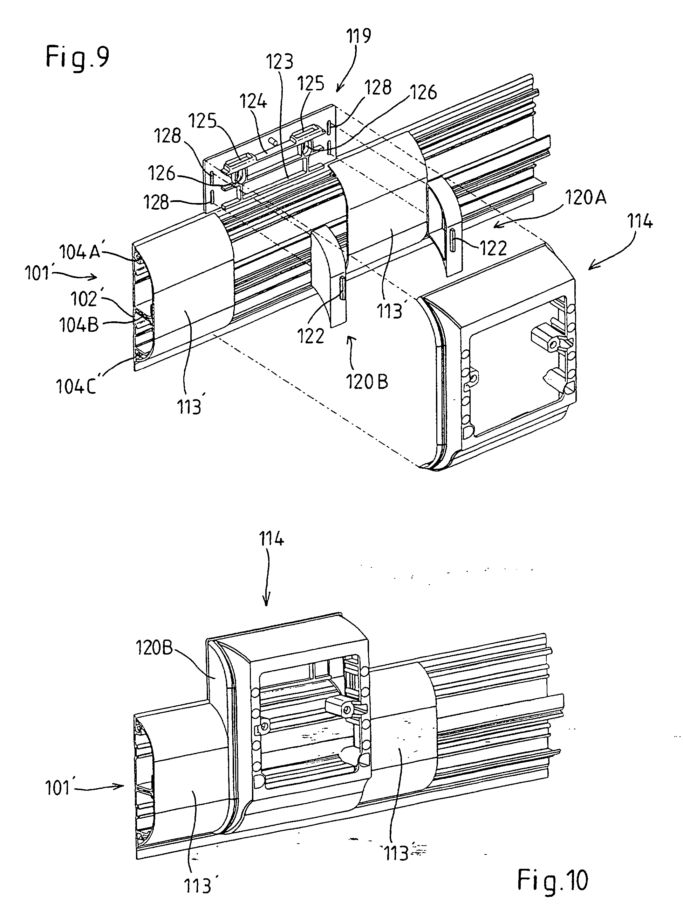

Bien entendu, et comme on le voit sur la figure 9, avant d'encliqueter le capot 114 sur le socle 101' et sur la semelle 119, on met en place le couvercle 113' et les flasques 120A et 120B, la distance séparant les deux tronçons de couvercle au niveau du capot 114 étant inférieure à la largeur de ce dernier et de la semelle 119 pour permettre le contact des flasques 120A et 120B et de la tranche du capot 114 avec ces couvercles.

Dans une variante non représentée, la semelle 19 est remplacée par une semelle comportant une zone sécable pour en éliminer une portion afin qu'elle puisse servir à la mise en place du support d'appareillage sur une goulotte de largeur intermédiaire entre la goulotte de largeur nominale telle que 1, 13 et 101, 113 et la goulotte de largeur inférieure telle que 1', 13' et 101', 113' un deuxième couple de flasques de fermeture, adaptés à cette largeur intermédiaire, étant également prévu.

## Revendications

1. Support d'appareillage électrique à rapporter sur une goulotte de largeur nominale, comportant des moyens d'adaptation propres à lui permettre d'être mis en place sur une goulotte de largeur inférieure prédéterminée, lesdits moyens d'adaptation comportant deux flasques de fermeture à établir entre ladite goulotte de largeur inférieure (1' ; 101 ') et ledit support, le long d'une partie respective des bords transversaux de ce dernier ; **caractérisé en ce que** les moyens d'adaptation comportent en outre une semelle (19 ; 119), de largeur égale à la différence des largeurs de ladite goulotte (1) de largeur nominale et de ladite goulotte (1') de largeur inférieure, à établir en bordure du socle (1' ; 101 ') de ladite goulotte de largeur inférieure, s'étendant d'un des flasques de fermeture (20A ; 120A) à l'autre (20B ; 120B), et munie de moyens d'engagement (28 ; 128) situés le long de ses bords transversaux, propres à l'assujettissement desdits flasques (20A, 20B ; 120A, 120B).

2. Support selon la revendication 1, **caractérisé en ce qu'**il comporte un élément encliquetable (5 ; 114) muni, le long d'un premier bord longitudinal, d'une première série d'au moins une patte d'accrochage (9 ; 109), et, le long de son deuxième bord longitudinal, d'une deuxième série d'au moins une patte d'accrochage (10 ; 110), chaque patte d'accrochage de la première série et de la deuxième série étant prévue pour se prendre, respectivement, sur un premier membre de retenue (4A, 104A) et sur un deuxième membre de retenue (4C ; 104C) du socle (1 ; 101) de ladite goulotte de largeur nominale ; tandis que ladite semelle (19 ; 119) comporte des moyens de retenue (24, 25 ; 124, 125) adaptés à recevoir ladite première série d'au moins une patte d'accrochage (9 ; 109) pour permettre l'encliquetage dudit élément (5 ; 114) du support, d'une part, grâce à ladite première série d'au moins une patte d'accrochage (9 ; 109), sur lesdits moyens de retenue (24, 25 ; 124, 125) de ladite semelle, lorsque celle-ci est établie en bordure du socle (1' ; 101') de ladite goulotte de largeur inférieure, et, d'autre part, grâce à ladite deuxième série d'au moins une patte d'accrochage (10 ; 110), sur un membre de retenue (4C' ; 104C') de ladite goulotte de largeur inférieure.

3. Support selon la revendication 2, **caractérisé en ce que** lesdits moyens de retenue (124 ; 125) que comporte la semelle sont propres à immobiliser ledit support (114) selon la direction longitudinale.

4. Support selon l'une quelconque des revendications 1 à 3, **caractérisé en ce que** ladite semelle (19 ; 119) comporte des orifices (26 ; 126) pour le passage de vis de fixation sur la même paroi que celle à laquelle est fixée ladite goulotte (1', 13' ; 101', 113') de largeur inférieure.

5. Support selon l'une quelconque des revendications 1 à 4, **caractérisé en ce que** ladite semelle (19 ; 119) comporte une nervure latérale (23 ; 123) de positionnement le long d'un bord longitudinal dudit socle de goulotte (1' ; 101') de largeur inférieure.

6. Support selon l'une quelconque des revendications 1 à 5, **caractérisé en ce que** ladite semelle comporte une zone sécable pour en éliminer une portion afin qu'elle puisse servir à la mise en place du support d'appareillage (5, 14 ; 114) sur une goulotte de largeur intermédiaire entre ladite goulotte de largeur nominale et ladite goulotte de largeur inférieure.

7. Support selon l'une quelconque des revendications 1 à 6, **caractérisé en ce que** lesdits moyens d'engagement que comporte la semelle, propres à l'assujettissement desdits flasques de fermeture (20A, 20B ; 120A, 120B), sont constitués, pour chaque flasque, par au moins une mortaise (28 ; 128) pratiquée dans l'épaisseur de la semelle.

8. Support selon l'une quelconque des revendications 1 à 7, **caractérisé en ce que** lesdits flasques de fermeture (20A, 20B ; 120A, 120B) sont adaptés, lorsque ledit support (5, 14 ; 114) est en place sur ladite goulotte (1', 13' ; 101', 113') de largeur inférieure, à être chacun bordés respectivement par ladite semelle (1 9 ; 119), par un couvercle (13' ; 113') de ladite goulotte de largeur inférieure, et par un capot (14 ; 114) que comporte ledit support.

9. Support selon l'une quelconque des revendications 1 à 8, **caractérisé en ce que** lesdits flasques de fermeture (20A, 20B ; 120A, 120B) présentent chacun une tranche délimitée par une première surface courbe (30), par une deuxième surface courbe (31) se raccordant à la première surface courbe, et par une surface plate (32) située entre lesdites première surface courbe (30) et deuxième surface courbe (31), la première surface courbe (30) suivant le profil de la surface externe du couvercle (13) de ladite goulotte de largeur nominale, la deuxième surface courbe (31) suivant le profil de la surface externe du couvercle (13') de ladite goulotte de largeur inférieure, tandis que la surface plate (32) suit le profil de la surface externe de la semelle (19 ; 119).

10. Support selon l'une quelconque des revendications 1 à 9, **caractérisé en ce que** lesdits flasques de fermeture (20A, 20B ; 120A, 120B) comportent chacun des tenons (29) d'engagement dans des mortaises (28 ; 128) de ladite semelle (19 ; 119).

11. Support selon l'une quelconque des revendications 1 à 10, **caractérisé en ce que** lesdits flasques de fermeture (20A, 20B ; 120A, 120B) comportent chacun un tenon (22 ; 122) d'engagement avec un capot (14 ; 114) que comporte ledit support.

12. Support selon l'une quelconque des revendications 1 à 11, **caractérisé en ce que** lesdits flasques de fermeture (20A, 20B ; 120A, 120B) comportent chacun une paroi plane encadrée par un rebord transversal à ladite paroi plane, venant du côté interne.

13. Support selon l'une quelconque des revendications 1 à 12, **caractérisé en ce qu'**il comporte, d'une part, une platine (5) adaptée à s'encliqueter soit sur le socle (1) de ladite goulotte de largeur nominale, soit sur ladite semelle (19) et sur le socle (1') de ladite goulotte de largeur inférieure, et, d'autre part, un capot (14) adapté à s'encliqueter sur ladite platine (5).

14. Support selon la revendication 13, **caractérisé en ce que** ledit capot (14) est plus large que ladite platine (5) et est adapté à ce que ses bords transversaux, lorsque le support (5, 14) est mis en place, viennent en contact soit avec le couvercle (13) de ladite goulotte de largeur nominale soit avec le couvercle (13') de ladite goulotte de largeur inférieure et avec lesdits flasques de support (20A, 20B), chaque dit couvercle (13, 13') étant disposé contre ladite platine (5), de part et d'autre de celle-ci.

15. Support selon l'une quelconque des revendications 1 à 12, **caractérisé en ce qu'**il comporte un capot (114) adapté à s'encliqueter soit sur le socle (101) de ladite goulotte de largeur nominale, soit sur ladite semelle (119) et sur le socle (101') de ladite goulotte de largeur inférieure, ledit capot (114) étant adapté à ce que ses bords transversaux, lorsqu'il est mis en place, viennent en contact soit avec le couvercle (113) de ladite goulotte de largeur nominale soit avec le couvercle (113') de ladite goulotte de largeur inférieure et avec lesdits flasques de fermeture (120A, 120B), chaque dit couvercle (113, 113') étant interrompu, au niveau dudit capot (114) sur une longueur inférieure à celle dudit capot.

16. Support selon l'une quelconque des revendications 1 à 15, **caractérisé en ce que** ladite semelle (19) et lesdits flasques de fermeture (20A, 20B) sont moulés d'une seule pièce avec un élément (5) dudit support et séparables de cet élément par des zones sécables.

## Claims

1. Electrical equipment support for attaching to trunking of nominal width, the support including adapter means enabling it to be fitted to trunking of predetermined lower width, said adapter means including two closure flanges adapted to be fitted between said trunking (1'; 101') of lower width and said support along a respective portion of the transverse edges of said support, **characterised in that** the adapter means further include a baseplate (19; 119) having a width that is equal to the difference between the width of said trunking (1) of nominal width and that of said trunking (1') of lower width, which is adapted to be fitted to flank the base section (1'; 101') of said trunking of lower width, extends from one of the closure flanges (20A; 120A) to the other (20B; 120B) and has engagement means (28; 128) along its transverse edges that are adapted to fasten said flanges (20A, 20B; 120A, 120B) together.

2. Support according to claim 1, **characterised in that** it includes a clip-on member (5; 114) having along a first longitudinal edge a first series of clips (9; 109) comprising at least one clip and along its second longitudinal edge a second series of clips (10; 110) comprising at least one clip, each clip of the first and second series is adapted to interengage with a respective first retaining member (4A; 104A) and a respective second retaining member (4C; 104C) of the base section (1; 101) of said trunking of nominal width, and said baseplate (19; 119) has retaining means (24, 25; 124, 125) adapted to receive said first series of clips (9; 109) to enable said member (5; 114) of the support to be clipped by said first series of clips (9; 109) to said retaining means (24, 25; 124, 125) of said baseplate, when it flanks the base section (1'; 101') of said trunking of lower width, and by said second series of clips (10; 110) to a retaining member (4C'; 104C') of said trunking of lower width.

3. Support according to claim 2, **characterised in that** said retaining means (124; 125) of the baseplate are adapted to immobilize said support (114) in the longitudinal direction.

4. Support according to any of claims 1 to 3, **characterised in that** said baseplate (19; 119) has openings (26; 126) for screws for fixing it to the same wall as said trunking (1', 13'; 101', 113') of lower width.

5. Support according to any of claims 1 to 4, **characterised in that** said baseplate (19; 119) has a lateral locating rib (23; 123) along a longitudinal edge of said base section (1'; 101') of the trunking of lower width.

6. Support according to any of claims 1 to 5, **characterised in that** said baseplate has an area adapted to be cut to eliminate a portion thereof so that it can be used to fit the equipment support (5, 14; 114) to trunking whose width is between that of said trunking of nominal width and that of said trucking of lower width.

7. Support according to any of claims 1 to 6, **characterised in that** said engagement means of the baseplate for attaching said closure flanges (20A, 203; 120A, 120B) consist of at least one mortise (28; 128) for each flange formed in the thickness of the baseplate.

8. Support according to any of claims 1 to 7, **characterised in that** each of said closure flanges (20A, 20B; 120A, 120B) is adapted to be flanked by said baseplate (19; 119), a cover section (13'; 113') of said trunking of lower width and a cap (14; 114) of said support, respectively, when said support (5, 14; 114) is fitted to said trunking (1', 13'; 101', 113') of lower width.

9. Support according to any of claims 1 to 8, **characterised in that** said closure flanges (20A, 20B; 120A, 120B) each have an edge delimited by a first curved surface (30), a second curved surface (31) connected to the first curved surface and a flat surface (32) between said first curved surface (30) and said second curved surface (31), the first curved surface (30) follows the profile of the outside surface of the cover section (13) of said trunking of nominal width, the second curved surface (31) follows the profile of the outside surface of the cover section (13') of said trunking of lower width and the flat surface (32) follows the profile of the outside surface of the baseplate (19; 119).

10. Support according to any of claims 1 to 9, **characterised in that** said closure flanges (20A, 20B; 120A, 120B) each include tenons (29) adapted to be engaged in mortises (28; 1.28) in said baseplate (19; 119).

11. Support according to any of claims 1 to 10, **characterised in that** said closure flanges (20A, 20B; 120A, 120B) each include a tenon (22; 122) adapted to interengage with a cap (14; 114) of said support.

12. Support according to any of claims 1 to 11, **characterised in that** said closure flanges (20A, 20B; 120A, 120B) each have a plane wall framed on the inside by a rim transverse to said plane wall.

13. Support according to any of claims 1 to 12, **characterised in that** it includes a plate (5) adapted to be clipped either to the base section (1) of said trunking of nominal width or to said baseplate (19) and to the base section (1') of said trunking of lower width and a cap (14) adapted to be clipped to said plate (5).

14. Support according to claim 13, **characterised in that** said cap (14) is wider than said plate (5) and, when the support (5, 14) is fitted, its transverse edges come into contact either with the cover section (13) of said trunking of nominal width or with the cover section (13') of said trunking of lower width and with said closure flanges (20A, 20B) and said cover sections (13, 13') are disposed against said plate (5), on respective opposite sides thereof.

15. Support according to any of claims 1 to 12, **characterised in that** it includes a cap (114) adapted to be clipped either to the base section (101) of said trunking of nominal width or to said baseplate (119) and to said base section (101') of said trunking of lower width and when said cap (114) is fitted its transverse edges come into contact either with the cover section (113) of said trunking of nominal width or with the cover section (113') of said trunking of said lower width and with said closure flanges (120A, 120B) and each of said cover sections (113, 113') is interrupted at the level of said cap (114) over a length less than that of said cap.

16. Support according to any of claims 1 to 15, **characterised in that** said baseplate (19) and said closure flanges (20A, 20B) are molded in one piece with a portion (5) of said support and adapted to be separated from it by areas adapted to be cut.

## Patentansprüche

1. Geräteträger zum Aufsetzen auf einen Installationskanal mit einer Nominalbreite, der Anpassmittel umfasst, die es ihm ermöglichen, auf einem Installationskanal mit einer vorbestimmten geringeren Breite angebracht zu werden, wobei die Anpassmittel zwei Verschluss-Seltenteile aufweisen, die zwischen dem Installationskanal mit einer geringeren Breite (1'; 101') und dem Träger längs eines entsprechenden Teils der Querränder von diesem anzubringen sind,
**dadurch gekennzeichnet, dass** die Anpassmittel ferner einen Boden (19; 119) aufweisen, dessen Breite dem Unterschied zwischen der Breite des Installationskanals (1) mit Nominalbreite und der Breite des Installationskanals (1') mit einer geringeren Breite entspricht, und der am Rand des Sockels (1'; 101') des Installationskanals mit einer geringeren Breite anzubringen Ist, wobei sich dieser zwischen dem einen Verschluss-Seitenteil (20A; 120A) und dem anderen (20B; 120B) erstreckt und mit Eingriffsmitteln (28; 128) entlang seiner Querränder versehen ist, die zur Befestigung der Seitenteile (20A, 20B; 120A, 120B) geeignet sind.

2. Träger nach Anspruch 1,
**dadurch gekennzeichnet, dass** er ein Rastelement (5; 114) umfasst, das entlang eines ersten Längsrands mit einer ersten Reihe mit wenigstens einer Schnapplasche (9; 109) und entlang seines zweiten Längsrands mit einer zweiten Reihe mit wenigstens einer Schnapplasche (10; 110) versehen ist, wobei jede Schnapplasche der ersten Reihe und der zweiten Reihe dazu vorgesehen ist, an einem ersten Halteglied (4A, 104A) bzw. einem zweiten Halteglied (4C; 104C) des Sockels (1; 101) des Installationskanals mit Nominalbreite einzurasten, während der Boden (19; 119) Haltemittel (24, 25; 124, 125) aufweist, die zur Aufnahme der ersten Reihe mit wenigstens einer Schnapplasche (9; 109) geeignet sind, um das Einrasten des Elements (5; 114) des Trägers einerseits dank der ersten Reihe mit wenigstens einer Schnapplasche (9; 109) an den Haltemitteln (24, 25; 124, 125) des Bodens, wenn dieser am Rand des Sockels (1'; 101') des Installationskanals mit geringerer Breite angebracht ist, und andererseits dank der zweiten Reihe mit wenigstens einer Schnapplasche (10; 110) an einem Halteglied (4C'; 104C') des Installationskanals mit einer geringeren Breite zu ermöglichen.

3. Träger nach Anspruch 2,
**dadurch gekennzeichnet, dass** die Haltemittel (124; 125), die der Boden aufweist, den Träger (114) in Längsrichtung zu fixieren vermögen.

4. Träger nach einem der Ansprüche 1 bis 3,
**dadurch gekennzeichnet, dass** der Boden (19; 119) Öffnungen (26; 126) zum Hindurchführen von Schrauben aufweist, die an derselben Wand befestigt werden, an der der Installationskanal (1', 13'; 101', 113') mit geringerer Breite befestigt ist.

5. Träger nach einem der Ansprüche 1 bis 4,
**dadurch gekennzeichnet, dass** der Boden (19; 119) eine seitliche Rippe (23; 123) zur Positionierung entlang eines Längsrands des Sockels des Installationskanals (1'; 101') mit einer geringeren Breite aufweist.

6. Träger nach einem der Ansprüche 1 bis 5,
**dadurch gekennzeichnet, dass** der Boden einen abtrennbaren Bereich aufweist, um ein Stück davon zu entfernen, damit dieser zur Anbringung des Geräteträgers (5, 14; 114') auf einem Installationskanal mit einer Breite, die zwischen dem Installationskanal mit Nominalbreite und dem Installationskanal mit einer geringeren Breite liegt, dienen kann.

7. Träger nach einem der Ansprüche 1 bis 6,
**dadurch gekennzeichnet, dass** die zum Befestigen der Verschluss-Seitenteile (20, 20B, 120A, 120B) geeigneten Eingriffsmittel, die der Boden aufweist, für jedes Seitenteil durch wenigstens einen Schlitz (28; 128) gebildet sind, der in der Dicke des Bodens ausgebildet ist.

8. Träger nach einem der Ansprüche 1 bis 7,
**dadurch gekennzeichnet, dass** die Verschluss-Seitenteile (20A, 20B; 120A, 120B) so ausgebildet sind, dass sie beim Anbringen des Trägers (5, 14; 114) auf dem Installationskanal (1'; 13'; 101', 113') mit einer geringeren Breite jeweils von dem Boden (19; 119), einer Abdeckung (13'; 113') des Installationskanals mit geringerer Breite und einer Haube (14; 114), die der Träger umfasst, gesäumt sind.

9. Träger nach einem der Ansprüche 1 bis 8,
**dadurch gekennzeichnet, dass** die Verschluss-Seitenteile (20A, 20B; 120A, 120B) jeweils einen Abschnitt aufweisen, der von einer ersten gebogenen Fläche (30), einer mit der ersten gebogenen Fläche verbundenen zweiten gebogenen Fläche (31) und einer zwischen der ersten gebogenen Fläche (30) und der zweiten gebogenen Fläche (31) liegenden ebenen Fläche begrenzt ist, wobei die erste gebogene Fläche dem Profil der Außenseite der Abdeckung (13) des Installationskanals mit Nominalbreite folgt und die zweite gebogene Fläche (31) dem Profil der Außenseite der Abdeckung (13') des Installationskanals mit einer geringeren Breite folgt, während die ebene Fläche (32) dem Profil der Außenseite des Bodens (19; 119) folgt.

10. Träger nach einem der Ansprüche 1 bis 9,
**dadurch gekennzeichnet, dass** die Verschluss-Seltenteile (20A, 20B, 120A, 120B) jeweils Zapfen (29) zum Eingreifen in Schlitze (28; 128) des Bodens (19; 119) aufweisen.

11. Träger nach einem der Ansprüche 1 bis 10,
**dadurch gekennzeichnet, dass** die Verschluss-Seitenteile (20A, 208; 120A, 120B) jeweils einen Zapfen (22; 122) zum Einstecken in eine Haube (14; 114), die der Träger umfasst, aufweisen.

12. Träger nach einem der Ansprüche 1 bis 11,
**dadurch gekennzeichnet, dass** die Verschluss-Seitenteile (20A, 20B; 120A, 120B) jewells eine ebene Wand aufweisen, die von einem quer zu der ebenen Wand verlaufenden Rand umgeben ist, der von der Innenseite ausgeht.

13. Träger nach einem der Ansprüche 1 bis 12,
**dadurch gekennzeichnet, dass** er einerseits eine Platte (5) umfasst, die entweder am Sockel (1) des Installationskanals mit Nominalbreite oder am Boden (19) und am Sockel (1') des Installationskanals mit einer geringeren Breite einzurasten vermag, und andererseits eine Haube (14), die auf der Platte (5) einzurasten vermag.

14. Träger nach Anspruch 13,
**dadurch gekennzeichnet, dass** die Haube (14) breiter ist als die Platte (5) und so ausgebildet ist, dass ihre Querränder beim Anbringen des Trägers (5, 14) entweder mit der Abdeckung (13) des Installationskanals mit Nominalbreite oder mit der Abdeckung (13') des Installationskanals mit einer geringeren Breite und mit den Trägerseitenteilen (20A, 20B) in Kontakt gelangen, wobei jede Abdeckung (13, 13') an der Platte (5) auf beiden Seiten angeordnet ist.

15. Träger nach einem der Ansprüche 1 bis 12,
**dadurch gekennzeichnet, dass** er eine Haube (114) umfasst, die entweder am Sockel (101) des Installationskanals mit Nominalbreite oder am Boden (119) und am Sockel (101') des Installationskanals mit einer geringeren Breite einzurasten vermag, wobei die Haube (114) so ausgebildet ist, dass ihre Querränder, bei ihrem Anbringen, entweder mit der Abdeckung (113) des Installationskanals mit Nominalbreite oder mit der Abdeckung (113') des Installationskanals mit einer geringeren Breite und mit den Verschluss-Seitenteilen (120A, 120B) in Kontakt gelangen, wobei jede Abdeckung (113, 113') in Höhe der Haube (114) auf einer Länge, die geringer ist als die der Haube, unterbrochen ist.

16. Träger nach einem der Ansprüche 1 bis 15,
**dadurch gekennzeichnet, dass** der Boden (19) und die Verschluss-Seitenteile (20A, 20B) mit einem Element (5) des Trägers einstückig gegossen sind und von diesem Element durch abtrennbare Bereiche getrennt sind.
